# EUROPÄISCHE PATENTSCHRIFT

(11) **EP 3 625 080 B1**
(45) Veröffentlichungstag und Bekanntmachung des Hinweises auf die Patenterteilung: **24.05.2023**
(21) Anmeldenummer: 18725767.0
(22) Anmeldetag: 03.05.2018
(51) Int. Cl.: B60L 13/00, B60L 13/03, E01B 25/00, B65G 47/64, B65G 54/02, H02P 25/06

(54) **MAGNETWEICHE FÜR EIN TRANSPORTSYSTEM**
MAGNET SWITCH FOR A TRANSPORT SYSTEM
AIGUILLE MAGNÉTIQUE DESTINÉE À UN SYSTÈME DE TRANSPORT

(30) Priorität: 18.05.2017 DE 102017208455
(43) Veröffentlichungstag der Anmeldung: 25.03.2020
(73) Patentinhaber: Krones AG, 93073 Neutraubling (DE)
(72) Erfinder: DAVIDSON, Hartmut, 93073 Neutraubling (DE); KIENDL, Thomas, 93073 Neutraubling (DE); POESCHL, Stefan, 93073 Neutraubling (DE); NEUBAUER, Michael, 93073 Neutraubling (DE); KAMMERL, Martin, 93073 Neutraubling (DE)
(74) Vertreter: Grünecker Patent- und Rechtsanwälte PartG mbB
(86) Internationale Anmeldenummer: PCT/EP2018/061248
(87) Internationale Veröffentlichungsnummer: WO 2018/210569

(56) Entgegenhaltungen:
- EP-A1- 3 109 998
- DE-A1-102013 218 389
- DE-U1- 20 209 174
- US-A- 5 517 924
- US-A1- 2007 044 676

## Beschreibung

Die Erfindung betrifft eine Magnetweiche, im Folgenden nur Weiche genannt, für ein Transportsystem, in denen ein oder mehrere bewegliche/s Transportelement/e mit einem magnetischen Reaktionselement, auch Mover genannt, entlang einer Transportbahn mittels eines oder mehrerer Linearmotorstränge (auch Statoren) genannt, bewegbar sind. Die Erfindung betrifft des Weiteren ein Transportsystem umfassend eine solche Weiche und optional ein, zwei, oder mehrere bewegliche Transportelemente, sowie ein Transportelement, das zum Einsatz auf so einer Weiche ausgebildet ist. Das Transportsystem kann insbesondere für den Einsatz in der Getränkemittelindustrie, z. B. in einer Getränkeabfüllanlage, ausgebildet sein.

Entsprechende Transportsysteme mit Linearmotorantrieb sind aus dem Stand der Technik bekannt. Beispielsweise zeigt die DE 10 2013 218389 A1 eine Vorrichtung und ein Verfahren zum Schalten einer passiven Weiche für Transportsysteme mit Linearmotoren.

In den Transportsystemen kann durch Wechselwirkung von erzeugten Magnetfeldern an einem oder mehreren Linearmotorsträngen und einem magnetischen Reaktionselement, das auf dem beweglichen Transportelement angebracht ist, eine definierte Vortriebskraft auf jedes einzelne bewegliche Element entlang einer Transportbahn aufgebracht werden. Die magnetischen Reaktionselemente auf den beweglichen Transportelementen können aus Permanentmagneten und/oder nicht-schaltenden Elektromagneten bestehen, oder diese umfassen. Ein nicht-schaltender Elektromagnet ist typischerweise ein Elektromagnet, der so mit einer Stromversorgung und/oder einer Regeleinheit der Transporteinrichtung verbunden ist, dass er stets in derselben Richtung von einem, vorzugsweise regelbaren, elektrischen Strom durchflossen wird. Die Systeme können modular ausgebildet sein, d.h. aus vorgefertigten Modulen zusammenbaubar sein. Die Module können sowohl gerade, als auch gekrümmte Bahnen umfassen und insbesondere Weichen umfassen.

In solchen Systemen ist es auch bekannt, zur Führung der beweglichen Transportelemente auf der Transportbahn eine Normalkraft (Magnetnormalkraft) zu nutzen, die eine Haltekraft der beweglichen Transportelemente jeweils in Richtung des nebenliegenden Linearmotorstrangs (oder der nebenliegenden Linearmotorstränge) bewirkt. Über mechanische Bauteile (im Folgenden auch Führung oder Führungskurve genannt) kann der minimal erreichbare Abstand zwischen den beweglichen Transportelementen und dem oder den Linearmotorsträngen, sowie eine Verschiebung quer zur Bewegungsachse begrenzt werden und/oder eine Führung des beweglichen Transportelementes auf der Transportbahn vorgegeben werden.

Bei Verwendung zweier einander gegenüberliegender Statoren im Übergangsbereich, in dem die Nebenbahn von der Hauptbahn abzweigt, können magnetische Weichen erzeugt werden, in denen sich die magnetischen Normalkräfte auf beiden Seiten aufheben, so dass es keine Vorzugsrichtung gibt. Typischerweise greift dabei das magnetische Reaktionselement zwischen die beiden Linearmotorstränge ein.

Durch eine selektive Bestromung der Linearmotorstränge auf den beiden Seiten der beweglichen Transportelemente können nun die Kräfte im Übergangsbereich beeinflusst werden. Insbesondere kann dabei die resultierende Kraft auf der gewünschten Weichenseite erhöht werden und damit die Weiche so geschaltet werden, dass das bewegliche Transportelement in die gewünschte Richtung geleitet wird. Die Kraft zum selektiven Führen des beweglichen Transportelementes entlang der Hauptbahn oder in Richtung der Nebenbahn, hier beispielhaft durch selektive Bestromung der Linearmotorstränge im Übergangsbereich der Weiche, wird als Schaltkraft bezeichnet.

Solche Transportsysteme werden auch Langstator-Linearmotoren genannt und sind beispielsweise auch aus der WO 2015 013824 A1 bekannt.

Die Normalkraft (Magnetnormalkraft) bezeichnet in dieser Anmeldung eine Kraft, die sich aufgrund des magnetischen Reaktionselementes an dem beweglichen Transportelement zwischen diesem und dem oder den Linearmotorsträngen ausbildet, wobei insbesondere die Normalkraft typischerweise auch ohne Beaufschlagung der Linearmotorstränge mit Strom aufgrund des magnetischen Reaktionselementes vorhanden sein kann.

Sie kann z. B. auf der Reluktanzkraft zwischen dem magnetischen Reaktionselement an dem beweglichen Transportelement und dem Kern im Stator, typischerweise einem Eisenkern, beruhen. Sie kann insbesondere dazu dienen, die beweglichen Transportelemente während des Transports relativ zu den Statoren zu stabilisieren oder zu halten, insbesondere auf einer Führung zu halten. Im Weichenbereich kommen nun neben den Normalkräften auch noch Schaltkräfte zum Einsatz, die auf einer Wechselwirkung zwischen den Magnetfeldern des beweglichen Transportelements und den Stator(en) beruhen. Diese Schaltkräfte überlagern sich mit der Normalkraft.

Aufgrund von fertigungsbedingten oder im Betrieb auftretenden Toleranzen bezüglich der Abstände zwischen beweglichen Transportelementen und Statoren, sowie der Magnetstärke von gegebenenfalls verwendeten Elektromagneten in den beweglichen Transportelementen können jedoch zusätzliche Kräfte auftreten. Solche Toleranzen können dazu führen, dass die Normalkräfte in Richtung des einen Stators höher sind, als die Normalkräfte des auf der anderen Seite angeordneten Stators, so dass es dadurch zu Fehlfunktionen kommen kann.

US 5 517 924 offenbart eine zweireihige Schleifenspulenkonfiguration für elektromagnetische Hochgeschwindigkeits-Magnetschwebebahnen, Führung, Antrieb und Richtungsumschaltung der Führungsbahn.

Die Erfindung umfasst eine Weiche eines Transportsystems für ein bewegliches Transportelement nach Anspruch 1 sowie ein Transportsystem nach Anspruch 6, das eine solche Weiche umfasst. Vorteilhafte Ausführungsformen sind in den abhängigen Ansprüchen beschrieben. Das Transportsystem kann insbesondere für den Einsatz in der Getränkemittelindustrie, z. B. in einer Getränkeabfüllanlage, ausgebildet sein.

Gemäß der Erfindung soll im Weichenbereich das Verhältnis von Normalkraft zu Schaltkräften so gewählt werden, dass die Weiche zuverlässig funktioniert. Da die Störgrößen typischerweise umso größer sind, je größer die Normalkraft ist, ändert sich mit einer Optimierung von dem Verhältnis zwischen Normalkraft zur Schaltkraft typischerweise auch das Verhältnis von Störgrößen zur Schaltkraft.

In einer erfindungsgemäßen Weiche kann daher die Schaltkraft im Übergangsbereich der Weiche so gewählt werden, dass die Weiche zuverlässig funktioniert.

Im Bereich der Weiche, insbesondere dem Übergangsbereich, in dem die Nebenbahn von der Hauptbahn abzweigt, ist das Transportsystem typischerweise so ausgebildet, dass die Führungswirkung der Normalkraft keine Rolle spielt, also insbesondere eine Schwächung der Normalkraft dem System nicht schadet. Dies kann beispielsweise durch eine Führung, z. B. auf den Statoren, erfolgen. Eine solche Führung kann z. B. nur im Bereich einer Weiche, nur im Übergangsbereich einer Weiche, oder optional auch in anderen oder allen Bereichen des Transportsystems vorhanden sein.

Erfindungsgemäß umfasst die Weiche eines Transportsystems für ein bewegliches Transportelement eine Hauptbahn, sowie eine abzweigende Nebenbahn, wobei das bewegliche Transportelement aus einem Übergangsbereich, in dem die Nebenbahn von der Hauptbahn abzweigt, wahlweise entlang der Hauptbahn geführt, oder in die Nebenbahn überführt werden kann. Hierbei ist die Bewegungsrichtung des Transportelements so, dass es sich entlang der Hauptbahn in Richtung des Übergangsbereichs so bewegt, dass es wahlweise entlang der Hauptbahn weitergeführt, oder in die Nebenbahn überführt werden kann und dann nach Durchlaufen der Weiche entweder entlang der Hauptbahn weiter, oder entlang der Nebenbahn weiterbewegt wird (im Folgenden auch genannt: Bewegungsrichtung auf die Weiche zu). An der Hauptbahn sowie an der Nebenbahn ist jeweils ein Linearmotorstrang zur Bewegung des beweglichen Transportelements vorgesehen, wobei mittels des einen Linearmotorstrangs eine Schaltkraft erzeugbar ist, mit der das bewegliche Transportelement entlang der Hauptbahn geführt oder in die Nebenbahn überführt werden kann. Im Übergangsbereich sind Mittel zur Erhöhung der Schaltkraft vorgesehen, wobei eine Erhöhung der Schaltkraft im Vergleich zu der Schaltkraft steht, die erzeugbar wäre, wenn mittels des Linearmotorstrangs in anderen Bereichen des Transportsystems eine Schaltkraft erzeugt würde, wobei im Übergangsbereich die Linearmotorstränge so ausgebildet sind, dass die magnetische Feldstärke der Linearmotorstränge höher geschaltet werden kann im Vergleich zu den Linearmotorsträngen stromabwärts und/oder stromaufwärts.

Die Windungszahl der Linearmotorstränge im Übergangsbereich ist erhöht im Vergleich zu den Linearmotorsträngen stromabwärts und/oder stromaufwärts.

Die zulässige Stromstärke der Linearmotorsträngen im Übergangsbereich ist erhöht, z. B. höher als stromabwärts und/oder stromaufwärts des Übergangsbereichs. Dies kann, beispielsweise, durch die Verwendung von Spulen mit höheren Spulenquerschnitten ermöglicht werden. Bei solchen größeren Spulenquerschnitten kann bei einer höheren Stromstärke die gleiche thermische Belastung erreicht werden, also die thermischen Grenzwerte noch eingehalten werden.

Wenn im Folgenden "stromaufwärts" oder "stromabwärts" verwendet wird, wird diese Bewegungsrichtung vorausgesetzt. Selbstverständlich kann das bewegliche Transportelement auch von der Nebenbahn auf die Hauptbahn bzw. entlang der Hauptbahn befördert werden, wenn es in die entgegengesetzte Richtung bewegt wird. Da hier allerdings keine Auswahl der Bahn erfolgen muss, auf die das bewegliche Transportelement geführt wird, wird auf die Schaltung, gemäß der ein bewegliches Transportelement von einer der beiden Nebenbahnen auf die Hauptbahn der Weiche geführt wird, im Folgenden nicht weiter eingegangen. Mittels der Linearmotorstränge kann typischerweise eine Schaltkraft erzeugt werden, mit der das bewegliche Transportelement wahlweise auf der Hauptbahn geführt oder in die Nebenbahn überführt werden kann.

Der Übergangsbereich umfasst den Bereich, der zwischen dem Punkt der Transportbahn, an dem ein zweiter Linearmotorstrang neben dem Transportelement dazukommt, wenn das Transportelement in anderen Bereichen nur durch einen Linearmotorstrang angetrieben wird, und dem Punkt der Transportbahn, an dem das Transportelement nur vom Linearmotorstrang der Hauptbahn oder dem Linearmotorstrang der Nebenbahn davon beeinflusst wird, liegt.

Alternativ und nicht erfindungsgemäß, wenn das Transportelement im Transportsystem durch zwei Linearmotorstränge bewegt wird, kann der Übergangsbereich den Bereich umfassen, oder der Bereich sein, in dem die beiden Linearmotorstränge neben der Hauptbahn nicht mehr parallel zueinander geführt werden (divergieren) und wo die neben den Nebenbahnen angeordneten Linearmotorstränge noch nicht parallel zueinander laufen. In der Weichenspitze setzen in einem solchen Fall nämlich typischerweise zwei Linearmotorstränge an, so dass auch in den Nebenbahnen das Transportelement wieder durch zwei Linearmotorstränge bewegt werden kann. Als Anfang des Übergangsbereichs kann der Teil des Übergangsbereichs bezeichnet werden, der von einem Transportelement als erstes durchlaufen wird, wenn es auf der Hauptbahn in Bewegungsrichtung auf die Weiche zu geführt wird, also z. B. der Bereich, an dem die beiden Linearmotorstränge neben der Hauptbahn beginnen, zu divergieren (oder beginnen würden, zu divergieren, wenn sie parallel zu dem Transportbahnrand geführt würden).

Der Übergangsbereich kann einen Bereich umfassen, in dem ein (jedes) Transportelement den gleichen Weg nimmt, unabhängig davon, ob es anschließend weiter entlang der Hauptbahn, oder in die Nebenbahn geführt wird. Optional können in diesem Bereich zwei Linearmotorstränge neben der Hauptbahn parallel zueinander geführt sein (oder so angeordnet sein, dass sie parallel geführt würden, wenn sie parallel zu dem Transportbahnrand geführt würden). Wenn dieser Bereich vom Übergangsbereich umfasst ist, können in diesem Teil des Übergangsbereichs bereits Mittel zur Erhöhung der Schaltkraft vorgesehen sein. So kann bereits vor der Trennung der Wege entweder entlang der Hauptbahn oder in die Nebenbahn eine Krafteinwirkung auf das Transportelement sichergestellt werden, die eine sichere Leitung in die gewünschte Richtung bewirkt.

Bei relativer Angabe in diesem Text, insbesondere dem Ändern, Verringern und Erhöhen der Normalkraft (oder Feldstärke, Windungszahl etc.), erfolgt diese Angabe im Vergleich zu einem anderen Bereich der Weiche, z. B. einem Bereich außerhalb des Übergangsbereichs der Weiche, und/oder einem anderen Bereich der Weiche oder des Transportsystems. Insbesondere können die relativen Angaben z. B. im Vergleich zu der entsprechenden Kraft oder Größe zwischen einem beweglichen Transportelement und dem Linearmotorstrang im Übergangsbereich der Weiche und dem Transportelement und dem entsprechenden Linearmotorstrang stromabwärts, z. B. stromabwärts am Ende der Weiche, und/oder stromaufwärts erfolgen.

Bei einem Übergangsbereich, insbesondere einem Übergangsbereich, der einen Bereich umfasst, in denen die Linearmotorstränge neben der Hauptbahn parallel zueinander geführt sind, sind die Mittel zur Erhöhung der Schaltkraft im Übergangsbereich typischerweise so ausgebildet, dass sie die Schaltkraft im Vergleich zu den Kräften zwischen dem jeweiligen Transportelement und dem Linearmotorstrang stromabwärts des Übergangsbereichs ändern können und/oder im Vergleich zu der Schaltkraft ändern können, die erzeugbar wäre (oder erzeugt würde), wenn mittels des oder der Linearmotorstränge in anderen Bereichen des Transportsystems eine Schaltkraft erzeugt würde. Beispielsweise kann, wenn das bewegliche Transportelement stromabwärts des Übergangsbereichs durch einen Linearmotorstrang angetrieben wird, die Normalkraft zwischen diesem Linearmotorstrang und dem Transportelement im Übergansbereich geändert (verringert, erhöht) sein. Zusätzlich kann im Übergangsbereich ein weiterer Normalkraftanteil, z. B. durch einen dazukommenden Linearmotorstrang, vorhanden sein, der ebenfalls geändert (verringert, erhöht) ist gegenüber der Normalkraft zwischen dem dazukommenden Linearmotorstrang und dem beweglichen Transportelement.

Nicht erfindungsgemäße Mittel zur Änderung der Normalkraft können insbesondere dazu vorgesehen sein, um die Normalkraft zu verringern. Beispielsweise können diese Mittel dazu geeignet sein, die Normalkraft so zu beeinflussen, dass diese im Übergangsbereich geringer ist, insbesondere beispielsweise stromabwärts des Übergangsbereichs.

Beispielsweise kann im Übergangsbereich der Weiche der Luftspalt zwischen den beiden Linearmotorsträngen und einem bewegten Transportelement vergrößert sein, z. B. größer als stromabwärts des Übergangsbereichs.

Durch die Vergrößerung des Luftspalts im Weichenbereich nimmt die (Magnet-)Normalkraft, die mit der Breite des Luftspalts typischerweise quadratisch abnimmt, schneller ab als die Schaltkräfte, die typischerweise damit linear abnehmen, so dass sich dadurch typischerweise das Verhältnis zwischen Schaltkraft und Normalkraft mit zunehmenden Luftspalt verbessert.

Eine solche Vergrößerung des Luftspalts zwischen den beiden Linearmotorsträngen und einem bewegten Transportelement kann insbesondere dadurch erfolgen, dass im Übergangsbereich der Weiche die beiden Linearmotorstränge versetzt sind im Bezug auf die Begrenzung der Transportbahn, also nicht im gleichen Abstand zum Rand der Transportbahn laufen wie in anderen Bereichen der Weiche (z. B. stromabwärts am Ende der Weiche), sondern im Übergangsbereich mit einem größeren Abstand zum jeweiligen Rand der Transportbahn gesetzt sind.

Alternativ oder zusätzlich kann der Luftspalt zwischen den beiden Linearmotorsträngen und einem bewegten Transportelement auch vergrößert werden, indem die Linearmotorstränge verdreht eingebaut sind in Bezug zur normalen Einbaurichtung im Bezug aufeinander und auf die Transportbahn (bzw. den Transportbahnrand).

Alternativ oder zusätzlich kann der Luftspalt zwischen den beiden Linearmotorsträngen und einem beweglichen Transportelement auch dadurch vergrößert werden, dass der Abstand zwischen dem Transportelement und den Linearmotorsträngen durch eine spezielle Führungskurve für das Transportelement vergrößert wird, also die Führungskurve im Übergangsbereich der Weiche so geführt wird, dass ein größerer Abstand zwischen den Linearmotorsträngen und dem Transportelement entsteht als in anderen Bereichen der Weiche, z. B. stromabwärts am Ende der Weiche. Dies kann beispielsweise dadurch erfolgen, dass die Führungskurve das Transportelement vom Transportbahnrand wegführt.

Zusätzlich oder alternativ kann der Übergangsbereich durch eine breitere Ausbildung des Übergangsbereichs vergrößert werden, also die beiden Linearmotorstränge im Übergangsbereich mit einem größeren Abstand zur Führungskurve geführt werden als in anderen Bereichen der Weiche (z. B. stromabwärts am Ende der Weiche).

Alternativ oder zusätzlich kann die Normalkraft dadurch verringert werden, dass im Übergangsbereich die magnetische Leitfähigkeit der Linearmotorstränge verringert ist, also z. B. kleiner ist als in einem anderen Bereich der Weiche, z.B. stromabwärts des Übergangsbereichs.

Die magnetische Leitfähigkeit der Linearmotorstränge im Übergangsbereich kann beispielsweise dadurch verringert werden, dass (mindestens) der ferromagnetische Teil der Linearmotorstränge im Übergangsbereich sich verjüngend ausgebildet sind, also schmaler wird. Dadurch kann beispielsweise ihr Kern, beispielsweise ein Eisenkern, in dem Bereich dünner ausgebildet sein. Dadurch kann die magnetische Leitfähigkeit der Linearmotorstränge gegenüber Bereichen, in denen der ferromagnetische Teil der Linearmotorstränge nicht verjüngt ist, verringert sein. Somit kann die Normalkraft in den Bereichen der Verjüngung verringert sein. Hierbei kann nur der Kern der Linearmotorstränge im Übergangsbereich sich verjüngend ausgebildet sein und optional die Außenbegrenzung der Linearmotorstränge in ihrem Durchmesser unverändert sein, oder alternativ können die Linearmotorstränge selber ebenfalls sich verjüngend ausgebildet sein.

Alternativ oder zusätzlich kann im Übergangsbereich ein Teil des Linearmotorgrundkörpers aus einem anderen Material bestehen, insbesondere z. B. als der Linearmotorgrundkörper in mindestens einem anderen Bereich, z. B. stromabwärts am Ende der Weiche. Typischerweise ist der Linearmotorgrundkörper aus Eisen. Das andere Material hat typischerweise eine geringere magnetische Leitfähigkeit (magnetische Permeabilität), so dass dadurch die magnetische Leitfähigkeit verringert werden kann. Hierbei kann der Linearmotorgrundkörper im Übergangsbereich teilweise oder vollständig aus dem anderen Material bestehen.

In einigen Ausführungsformen kann im Übergangsbereich eine Stromzuführung vorgesehen sein, die es erlaubt, zwei voneinander unabhängig ansteuerbare Elektromagnete auf einem Transportelement anzusteuern, die jeweils einem Linearmotorstrang zugewandt sind. Die Ansteuerung kann für die beiden Elektromagneten voneinander unabhängig möglich sein oder gekoppelt sein. Typischerweise ist die Stromzuführung so ausgebildet, dass der erste Elektromagnet des Transportelements so geschaltet werden kann, dass die Normalkraft auf der einem ersten Linearmotorstrang zugewandten Seite verstärkt wird, und der zweite Elektromagnet so geschaltet werden kann, dass die Normalkraft auf der dem zweiten Linearmotorstrang zugewandten Seite verringert wird. Typischerweise ist eine umgekehrte Schaltung ebenfalls möglich, so dass das Transportelement wahlweise entlang der Hauptbahn geführt oder in die Nebenbahn überführt werden kann. Dadurch kann die Änderung der Normalkraft einen Beitrag zur Überführung des beweglichen Transportelements in die gewählte Bahn leisten (die Schaltkraft erhöhen).

Ein nicht zur Erfindung gehörendes bewegliches Transportelement ist typischerweise dafür ausgebildet, auf einem Transportsystem bewegt zu werden und umfasst insbesondere typischerweise ein magnetisches Reaktionselement, mit dem durch Steuerung durch die Linearmotorstränge das Transportelement auf der Transportbahn bewegbar ist, typischerweise entlang einer Führung.

Neben dem magnetischen Reaktionselement kann das bewegliche Transportelement auch zwei voneinander unabhängig schaltbare Elektromagnete umfassen und/oder das magnetische Reaktionselement kann durch zwei unabhängig voneinander schaltbare Elektromagnete gebildet sein. Diese Elektromagnete sind typischerweise so ausgebildet, dass sie im Übergangsbereich der Weiche getrennt ansteuerbar sind, z. B. mit einer oben beschriebenen Stromzuführung, so dass die Normalkraft auf der einem Linearmotorstrang zugewandten Seite gesenkt und auf der anderen gesteigert werden kann, so dass das Transportelement zuverlässiger wahlweise entlang der Hauptbahn oder in die Nebenbahn der Weiche geführt werden kann.

Erfindungsgemäß sind bei der Weiche im Übergangsbereich Mittel zur Erhöhung der Schaltkraft vorgesehen.

Insbesondere können beispielsweise im Übergangsbereich die Linearmotorstränge so ausgebildet sein, dass die magnetische Feldstärke der Linearmotorstränge höher geschaltet werden kann, insbesondere z. B. als stromabwärts des Übergangsbereichs in der Hauptbahn und/oder der Nebenbahn und/oder stromaufwärts. Dies kann insbesondere bedeuten, dass die beim sicheren Betrieb möglichen magnetischen Feldstärken der Linearmotorstränge für diesen Bereich höher sind.

Eine Erhöhung der Feldstärke in den Linearmotorsträngen verstärkt die Wechselwirkung zwischen den Linearmotorsträngen (Statoren) und dem beweglichen Transportelement (genauer: dem magnetischen Reaktionselement oder -elementen oder anderen (passiven) magnetischen Elementen des beweglichen Transportelementes). Durch eine höhere magnetische Feldstärke kann insbesondere die dadurch erzeugbare Schaltkraft erhöht werden.

Hierbei kann die Schaltkraft dadurch erfolgen, dass nur ein Linearmotorstrang bestromt wird und damit eine Anziehungskraft in Richtung der gewählten Bahn (Haupt- oder Nebenbahn) ausübt, während der andere nicht bestromt wird, so dass das bewegliche Transportelement in eine Richtung und die gewünschte Bahn geführt wird. Alternativ kann, statt einen Linearmotor nicht zu bestromen, dieser so bestromt werden, so dass er eine abstoßende Kraft auf das bewegliche Transportelement ausübt, so dass die abstoßende Wirkung das bewegliche Transportelement zusätzlich in Richtung der gewünschten Bahn "schiebt".

Eine solche Ausbildung der Linearmotorsträngen, die eine höhere Schaltung der magnetischen Feldstärke erlaubt, kann beispielsweise umfassen, dass die Windungszahl der Linearmotorstränge im Übergangsbereich höher ist als an mindestens einem anderen Punkt der Weiche oder des Transportsystems, insbesondere z. B. stromabwärts am Ende der Weiche und/oder stromaufwärts des Übergangsbereichs. Mit höherer Windungszahl sinkt die maximal mögliche Vorschubgeschwindigkeit, so dass typischerweise Weiche mit erhöhte Windungszahlen in Transportsystemen eingesetzt werden können, in denen auf der Weiche nicht die gleiche Vorschubgeschwindigkeit wie stromaufwärts erreicht werden muss.

Alternativ oder zusätzlich können Bauteile mit höheren thermischen Grenzwerten zum Einsatz kommen, die eine Erhöhung der Stromstärke erlauben.

Alternativ oder zusätzlich kann im Übergangsbereich die Wärmeabfuhr verbessert sein, z. B. besser als in einem Bereich stromabwärts und/oder stromaufwärts. Eine bessere Wärmeabfuhr kann durch eine bessere Kühlung, beispielsweise durch zusätzliche Kühlrippen, eine Wasserkühlung, eine verbesserte Wasserkühlung oder Anbau eines Lüfters und/oder eine Verbesserung der Konvektion erreicht werden. Durch zusätzliche Kühlung kann die zulässige Stromstärke erhöht werden, da dann die thermischen Grenzwerte weniger schnell erreicht werden als ohne Kühlung.

Alternativ oder zusätzlich kann die Weiche im Übergangsbereich ansteuerbare Spulen umfassen, die zusätzlich zu den Spulen der Linearmotorstränge vorhanden sind und dazu geeignet sind, die Schaltkraft im Zusammenspiel mit einem oder mehreren magnetisch leitfähigen passiven Bauteilen auf einem beweglichen Transportelement zu erhöhen.

Beispielsweise können im Übergangsbereich der Weiche zusätzliche Spulen umfasst sein. Beispielsweise können diese bei gedanklicher Betrachtung einer Ebene die durch die beiden Linearmotorsträngen geht, senkrecht zur Ebene oberhalb und unterhalb (bzw. rechts und links) dieser Ebene angeordnet sein. Die Spulen können mit den Linearmotorsträngen zusammen in einer Ebene senkrecht zu der betrachteten Ebene durch die Linearmotorstränge angeordnet sein. Wenn die Spulen eine andere Breite als die Spulen der Linearmotorstränge haben, bezieht sich die betrachtete Ebene typischerweise auf die Ebene der Spulenseite, die dem beweglichen Transportelement zugewandt ist. Alternativ können sie in Richtung parallel zu der betrachteten Ebene durch die Linearmotorstränge in Richtung der Transportbahn nach hinten versetzt sein.

Ein nicht zur Erfindung gehörendes Transportelement kann ein oder mehrere magnetisch leitfähige passive Bauteile umfassen, die so angeordnet sind, dass sie zusammen mit den zuvor beschriebenen Spulen, die im Übergangsbereich zusätzlich zu den Spulen der Linearmotorsträngen vorhanden sein können, zusammenwirken können, um die Schaltkraft zu erhöhen. Insbesondere kann durch die Wechselwirkung zwischen diesen Spulen und den magnetisch leitfähigen passiven Bauteilen die Schaltkraft in die gewählte Richtung entlang der Hauptbahn oder in die Nebenbahn erhöht werden.

Passive Bauteile können beispielsweise als Teil des nicht zur Erfindung gehörenden Transportelements ausgeführt werden und aus ferromagnetischem Material wie beispielsweise Eisen bestehen, oder ein solches umfassen. Sie entsprechen typischerweise in den Abmaßen, zumindest in der Höhe, (etwa) den Abmaßen der zusätzlich angebrachten Spulen und befinden sich typischerweise auch räumlich in dieser Ebene. Typischerweise ist ein solches passives Bauteil maximal so breit wie das magnetische Reaktionselement auf dem Transportelement. Die Höhe richtet sich typischerweise nach der zu erzielenden Kraft und bewegt sich typischerweise im Bereich von ca. 5 bis 10 mm.

Die Erfindung umfasst des Weiteren ein Transportsystem für ein bewegliches Transportelement, das mindestens eine Transportbahn mit mindestens einer Weiche wie zuvor beschrieben umfasst. Das Transportsystem kann insbesondere für den Einsatz in der Getränkemittelindustrie, z. B. in einer Getränkeabfüllanlage, ausgebildet sein. Ein Transportsystem kann optional eine oder mehrere zusätzliche Weichen und/oder modulare Fortsetzungen der Haupt- und/oder Nebenbahn umfassen. Typischerweise umfasst ein solches Transportsystem eine Führungskurve oder andere mechanische Bauteile, entlang derer das bewegliche Transportelement auf der Transportbahn geführt wird. Ein solches Transportsystem kann ein oben beschriebenes Transportelement oder mehrere der oben beschriebenen Transportelemente umfassen.

Die Mittel zum Erhöhen der Schaltkraft und Verändern der Normalkraft können in jeglicher Kombination angewandt werden. Beispielsweise kann eine gleichzeitige Änderung (Verringerung) der Normalkraft zusammen mit einer Erhöhung der Schaltkraft, z. B. durch zusätzliche Spulen und/oder Elektromagneten eine noch zuverlässigere Zuführung des Transportelementes auf die gewünschte Bahn der Weiche erreichen.

Nicht zur Erfindung gehörend kann auch ein Verfahren zum Schalten von einer oder mehreren der oben beschriebenen Komponenten in einem Transportsystem vorgesehen sein, um ein bewegliches Transportelement auf die gewählte Bahn (entlang der Hauptbahn oder in die Nebenbahn) zu überführen.

Weitere Ausführungsbeispiele werden im Folgenden mit Blick auf die Figuren beschrieben. Hierbei zeigt:
**Figur 1a und Figur 1b** eine Weiche aus dem Stand der Technik;
**Figur 2a und Figur 2b** eine Weiche mit einem im Übergangsbereich größeren Luftspalt zwischen Transportbahn und Linearmotorsträngen;
**Figur 3a und Figur 3b** eine andere Weiche mit im Übergangsbereich größeren Luftspalt zwischen Transportbahn und Linearmotorsträngen;
**Figur 4a und Figur 4b** eine weitere Weiche mit im Übergangsbereich größeren Luftspalt zwischen Transportbahn und Linearmotorsträngen;
**Figur 5a und Figur 5b** eine Weiche, bei der der Linearmotorgrundkörper im Übergangsbereich teilweise aus einem anderen Material besteht;
**Figur 6a und Figur 6b** eine Weiche, in der der Linearmotorgrundkörper im Übergangsbereich vollständig auf einem anderen Material ausgebildet ist;
**Figur 7** einen Querschnitt durch ein Transportelement im Übergangsbereich einer Weiche;
**Figur 8** einen Querschnitt durch ein Transportelement im Übergangsbereich einer Weiche; und
**Figur 9** einen Querschnitt durch ein Transportelement im Übergangsbereich einer Weiche.

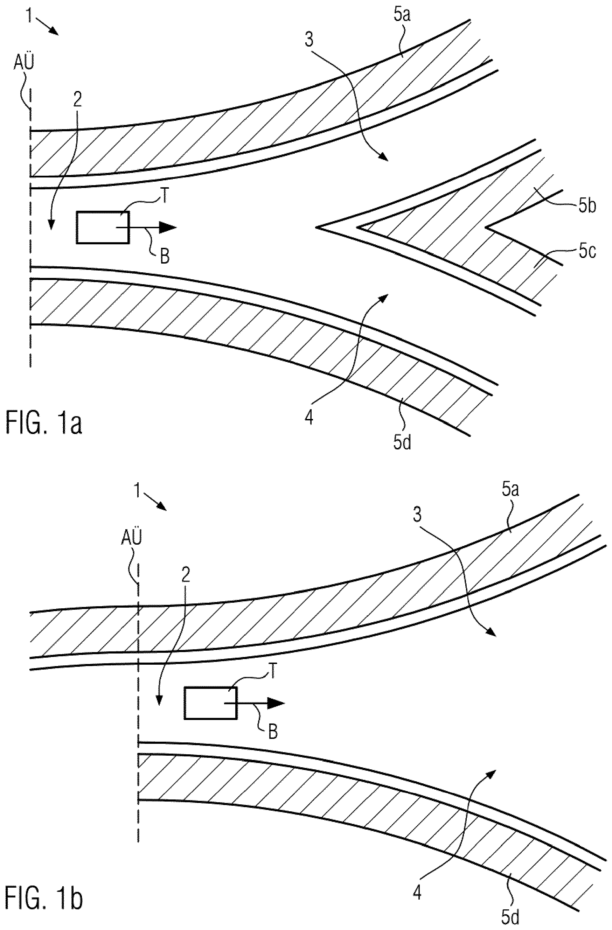

In Figur 1a ist eine aus dem Stand der Technik bekannte Weiche 1 gezeigt. Sie umfasst einen Übergangsbereich 2, eine Hauptbahn 3 und eine Nebenbahn 4, in die das bewegliche Transportelement T bei Bewegungsrichtung B (auf die Weiche zu) wahlweise überführt werden kann. Eine solche Überführung funktioniert natürlich nur, wenn sich das bewegliche Transportelement in Bewegungsrichtung B auf der Transportbahn bewegt. Eine entsprechend umgekehrte Bewegungsrichtung ist typischerweise auch möglich. Da in diesem Fall aber die Auswahl der Richtung nicht erfolgen muss, wird dieser Fall im Folgenden nicht weiter diskutiert.

Entlang der Hauptbahn laufen im Übergangsbereich Linearmotorstränge 5a und 5d erst parallel. Im Übergangsbereich der Weiche entfernen sich Linearmotorstränge 5a und 5d voneinander (divergieren, so dass sie nicht mehr parallel laufen). Linearmotorstrang 5a wird nach dem Übergangsbereich entlang der Hauptbahn 3, und Linearmotorstrang 5d entlang der Nebenbahn 4 geführt. Damit auch für die Nebenbahnen nach der Verzweigung die Führung der beweglichen Transportelemente T durch zwei Linearmotorstränge erfolgt, die parallel zueinander laufen, setzen an der Weichenspitze Linearmotorstränge 5b und 5c an. Linearmotorstrang 5b läuft dann parallel zu dem Linearmotorstrang 5a, wohingegen Linearmotorstrang 5c parallel zu Linearmotorstrang 5d läuft, so dass jeweils die Linearmotorstränge 5a und 5b zusammen ein Transportelement auf der Nebenbahn 3 und die Linearmotorstränge 5c und 5d zusammen ein Transportelement T auf der Nebenbahn 4 beschleunigen können.

Ein beispielhafter Anfang des Übergangsbereichs AÜ ist in Figur 1a eingezeichnet, wo die Linearmotorstränge 5a und 5d anfangen, zu divergieren. Alternativ kann dieser Anfang der Übergangsbereichs sich auch an einer anderen Stelle befinden, z. B. in der Figur weiter nach links verschoben sein und der Übergangsbereich einen Bereich der Hauptbahn umfassen, in dem die Linearmotorstränge 5a und 5d parallel verlaufen (nicht gezeigt).

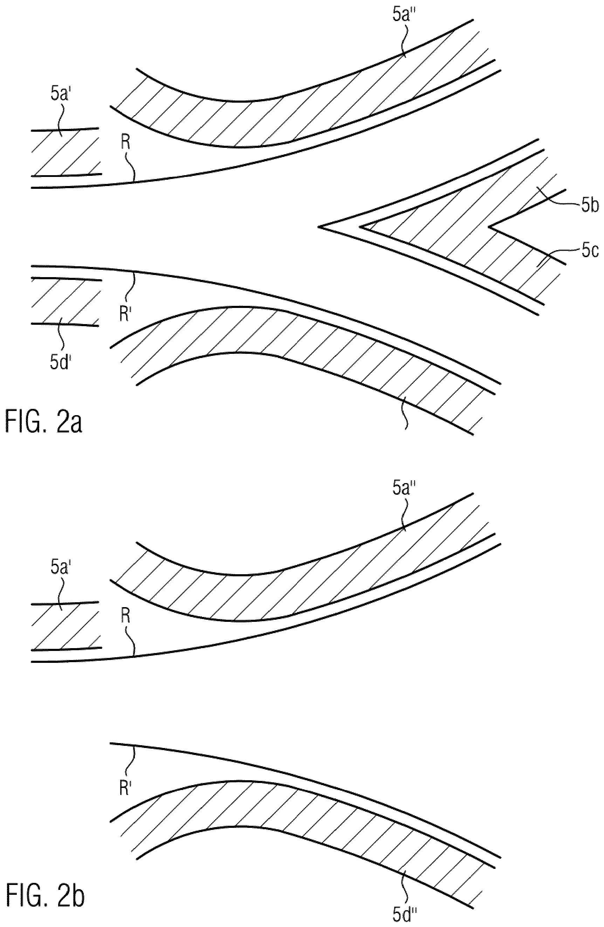

In anderen Ausführungsformen des Standes der Technik, wie z. B. in Figur 1b gezeigt, werden die Transportelemente entlang der Hauptbahn 3 nur durch einen Linearmotorstrang 5a bewegt und erst im Übergangsbereich 2 kommt ein weiterer Linearmotorstrang 5d hinzu, durch den das bewegliche Transportelement optional in die Nebenbahn 4 überführt werden kann. Eingezeichnet ist ebenfalls ein beispielhafter Anfang des Übergangsbereichs AÜ. Im Übergangsbereich einer Weiche (sowohl im Stand der Technik, als auch den im Folgenden beschriebenen erfindungsgemäßen Weichen, z. B. den Weichen der Figuren 2b, 3b, 4b, 5b) können optional im Übergangsbereich die Linearmotorstränge 5a und 5d in einem Bereich parallel verlaufen, bevor sie auseinander laufen, um entlang der Hauptbahn bzw. der Nebenbahn zu führen (nicht gezeigt). In einem solchen Fall kann der Übergangsbereich, wie beispielhaft für Figur 1a erläutert, auch an einer anderen Stelle, z. B. in der Figur weiter nach links verschoben sein, insbesondere z. B. zu Beginn des Bereichs anfangen, in dem der zweite Linearmotorstrang hinzukommt.

Figur 2a zeigt ein Beispiel einer nicht erfindungsgemäßen Weiche, bei der im Übergangsbereich der Luftspalt zwischen den beiden Linearmotorsträngen und einem bewegten Transportelement größer ist als an mindestens einem anderen Punkt der Transportbahn, z. B. stromabwärts. Insbesondere sind in Figur 2a die Linearmotorstränge 5a" und 5d" im Übergangsbereich versetzt zu der normalen Anordnung von Linearmotorsträngen 5a`, 5d` und 5a" und 5d" stromabwärts des Übergangsbereichs zu den Transportbahnrändern R, R` angeordnet, so dass sich im Übergangsbereich ein größerer Luftspalt zwischen den Linearmotorsträngen 5a" und 5d" und den Transportbandrändern R, R` und damit typischerweise auch zwischen einem (typischerweise entlang einer Führung) auf der Transportbahn bewegten Transportelement im Übergangsbereich ergibt.

Der Luftspalt kann, wie hier beispielhaft eingezeichnet, seinen größten Wert am Anfang des Übergangsbereichs haben. An dieser Stelle erfolgt typischerweise die erste Steuerung des beweglichen Transportelementes, so dass in diesem Bereich Störungen besonders störend wirken, da sie sehr leicht zur Überführung des transbeweglichen Transportelementes in die falsche Bahn führen können. Daher ist insbesondere in diesem Bereich eine Verringerung der Normalkraft vorteilhaft.

Figur 2b zeigt eine erfindungsgemäße Weiche für ein System, in dem das bewegliche Transportelement im Transportsystem außerhalb der Weiche nur durch einen Linearmotorstrang angetrieben wird, z. B. auf der Hauptbahn (in den Bereichen außerhalb des Übergangsbereichs) durch Linearmotorstränge 5a` und 5a" und auf der Nebenbahn durch Linearmotorstrang 5d". Allerdings gibt es entsprechend keinen Linearmotorstrang 5d` in Figur 2b. Auch in einem solchen System kann entsprechend Figur 2a im Übergangsbereich der Luftspalt zwischen den beiden Linearmotorsträngen und einem bewegten Transportelement vergrößert sein, d. h. der Abstand zwischen jeweils einem Transportelement und dem Linearmotorstrang im Übergangsbereich größer als z. B. stromabwärts am Ende der Weiche oder stromabwärts der Weiche, wenn das bewegliche Transportelement entlang diesem Linearmotorstrang weitergeführt wird. Die für Figur 2a beschriebenen weiteren Merkmale können in einer Weiche, wie in Figur 2b gezeigt, optional ebenso umfasst sein.

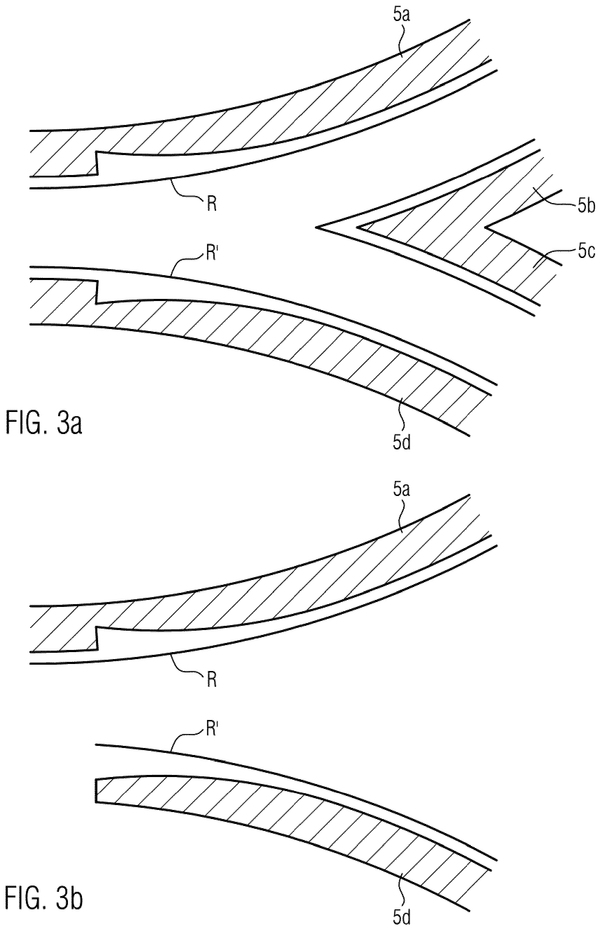

Figur 3a zeigt eine alternative, nicht erfindungsgemäße Weiche, in der ebenfalls der Luftspalt zwischen dem beweglichen Transportelement und den Linearmotorsträngen im Übergangsbereich vergrößert ist. Auch hier kann der größte Wert des Luftspaltes insbesondere am Anfang des Übergangsbereichs vorliegen. In dem gezeigten Beispiel sind allerdings die Linearmotorstränge nicht versetzt angeordnet, sondern sich verjüngend ausgebildet, so dass sich dadurch ein vergrößerter Luftspalt zu den Transportbahnrändern R, R` und damit auch zu einem beweglichen Transportelement auf der Transportbahn ergibt. Alternativ kann der Durchmesser der Linearmotorstränge gleich bleiben und nur der Kern, z. B. der Eisenkern, der Linearmotorstränge sich verjüngend ausgebildet sein (nicht gezeigt).

Figur 3b zeigt eine entsprechende erfindungsgemäße Weiche für ein System, in dem das bewegliche Transportelement im Transportsystem außerhalb der Weiche nur durch einen Linearmotorstrang angetrieben wird. Die anderen für Figur 3a beschriebenen Merkmale und Alternativen können bei einer in Figur 3b gezeigten Weiche optional ebenso umfasst sein.

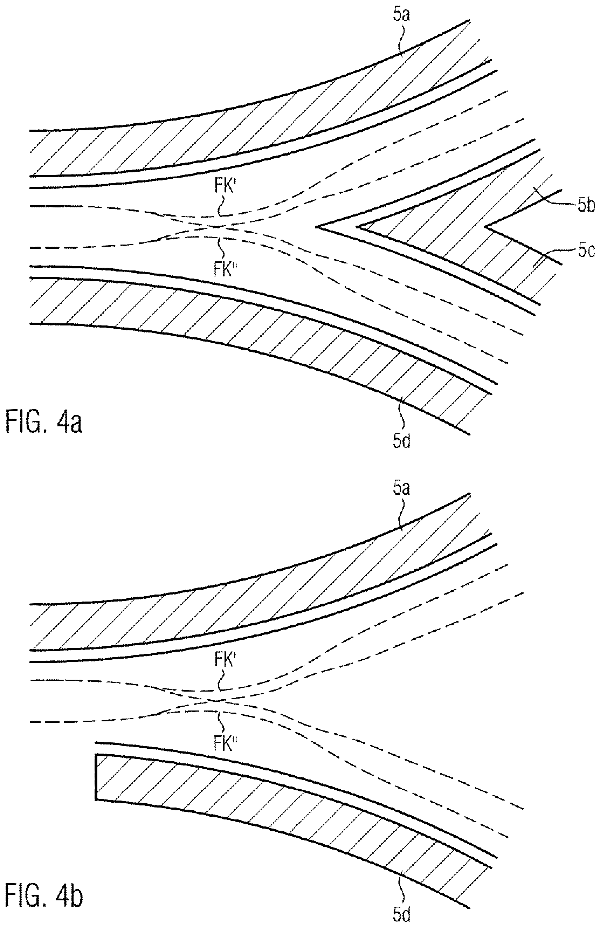

Figur 4a zeigt ein anderes nicht erfindungsgemäßes Beispiel einer Weiche, in der der Luftspalt vergrößert ist. Im gezeigten Beispiel wird der Luftspalt zwischen Linearmotorsträngen 5a und 5d dadurch vergrößert, dass die Führung (hier beispielhaft in Form von Führungskurven FK`, FK") entsprechend ausgebildet ist, also von den Linearmotorsträngen weg führt. Alternativ kann der Luftspalt auch durch Vergrößerung des Weichenbereichs oder als Anordnung der Linearmotorstränge 5a und 5d weiter außen erfolgen (nicht gezeigt).

Die Vergrößerung des Luftspalts kann beispielsweise dadurch erfolgen, dass eine Einheit aus Führung und Motorstrang, in Figur 4a beispielsweise 5d und FK", um den gewünschten zusätzlichen Abstand von der Einheit 5a und FK` verschoben wird. Der Abstand zwischen FK` und FK" kann beispielsweise dem bisherigen, nicht veränderten Führungsabstand in der Weiche (z. B. stromaufwärts oder stromabwärts) entsprechen. Durch die angepasste Kontur der Führungskanten, analog zu Figur 4a, kann sich somit ein größerer Luftspalt zwischen den Linearmotorsträngen und Reaktionselement ergeben.

Figur 4b zeigt eine entsprechende erfindungsgemäße Weiche wie in Figur 4a für ein System, in dem das bewegliche Transportelement im Transportsystem außerhalb der Weiche nur durch einen Linearmotorstrang angetrieben wird. Die anderen für Figur 4a beschriebenen Merkmale und Alternativen können bei einer in Figur 4b gezeigten Weiche optional ebenso umfasst sein.

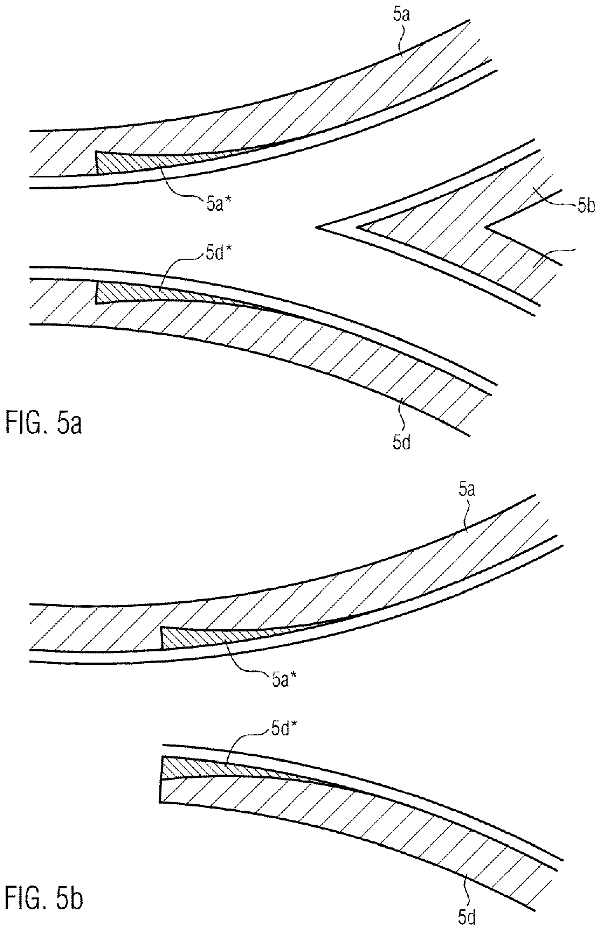

Figur 5a zeigt eine nicht erfindungsgemäße Weiche, in dem ein Teil der Linearmotorgrundkörper aus einem anderen Material besteht als der Rest des Linearmotorgrundkörpers, insbesondere in dem gezeigten Beispiel der Linearmotorgrundkörper, z. B. stromabwärts des Übergangsbereichs. Hierbei kommt typischerweise der in den Bereichen 5a* und 5d* ein Material mit einer geringeren magnetischen Leitfähigkeit zum Einsatz als in anderen Teilen der Linearmotorgrundkörper 5a, 5d und der Linearmotorgrundkörper 5b und 5c. Dies ermöglicht eine Reduzierung der Normalkraft in dem Übergangsbereich. Wenn das ersetzte Volumen des Grundkörpers entlang dem Verlauf des Grundkörpers variiert, ist typischerweise am Anfang des Übergangsbereichs der größte Anteil des Linearmotorgrundkörpers mit einem anderen Material ersetzt, so dass in dem Bereich, in Störungen typischerweise den meisten Einfluss haben, die Normalkraft am meisten verringert ist.

Figur 5b zeigt eine erfindungsgemäße Weiche für ein System, in dem das bewegliche Transportelement im Transportsystem außerhalb der Weiche nur durch einen Linearmotorstrang angetrieben wird. Die anderen für Figur 5a beschriebenen Merkmale können bei einer in Figur 5b gezeigten Weiche optional ebenso umfasst sein.

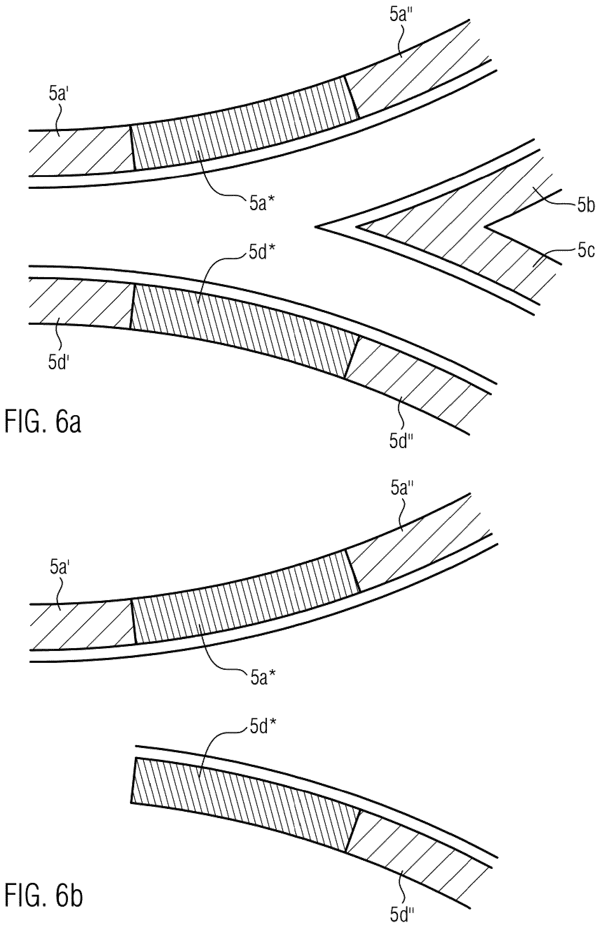

Figur 6a zeigt eine nicht erfindungsgemäße eine Weiche, in dem in den Bereichen 5a* und 5d* der Linearmotorgrundkörper vollständig aus einem anderen Material, typischerweise mit geringerer magnetischer Leitfähigkeit, ausgebildet ist, z. B. als die Linearmotorgrundkörper in den Bereichen 5a`, 5a", 5d`, 5d" ausgebildet ist. Typischerweise ist das andere Material im Übergangsbereich angeordnet.

Figur 6b zeigt eine erfindungsgemäße Weiche für ein System, in dem das bewegliche Transportelement im Transportsystem außerhalb der Weiche nur durch einen Linearmotorstrang angetrieben wird. Dementsprechend gibt es den Linearmotorstrangbereich 5d` in der gezeigten Weiche nicht. Die anderen für Figur 6a beschriebenen Merkmale können bei einer in Figur 6b gezeigten Weiche optional ebenso umfasst sein.

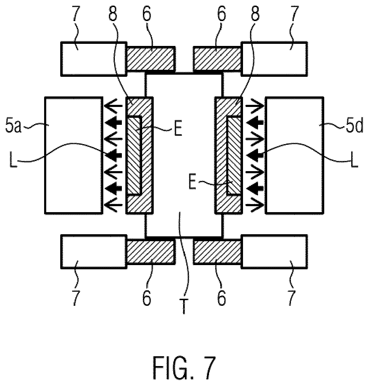

Figur 7 zeigt einen Querschnitt durch ein nicht erfindungsgemäßes bewegliches Transportelement T. In der gezeigten Ausführungsform umfasst das bewegliche Transportelement beidseitig voneinander unabhängig schaltbare Elektromagnete E. In dem gezeigten Beispiel ist ein Querschnitt durch das Transportelement und die Linearmotorstränge 5a und 5d gezeigt und zwar im Übergangsbereich auf der Hauptbahn bevor das Transportelement in die Nebenbahn überführt oder entlang der Hauptbahn weiterbewegt ist, aber während schon Kräfte zum Führen des Transportelementes auf die gewählte Bahn wirken.

Eingezeichnet ist hier die Situation, in der die beiden voneinander unabhängig schaltbaren Elektromagnete E in die gleiche Richtung geschaltet sind, so dass sie beide in der Wechselwirkung mit den Linearmotoren eine Kraft nach links ausüben. Auf der in der Figur links gezeichneten Seite des Transportelementes T verstärkt der Elektromagnet E die Normalkraft, während der Elektromagnet auf der in der Figur rechts gezeigten Seite die Normalkraft schwächt. Insgesamt wird dadurch eine zusätzliche Kraft nach links erzeugt, so dass das Transportelement T in diese Richtung geführt würde, und entsprechend auf die linke Bahn (z. B. die Hauptbahn oder die Nebenbahn, abhängig davon, welche nach links führt) geleitet werden kann. Eine Stromversorgung für die Elektromagnete E ist, obwohl in einem erfindungsgemäßen System oder einer Weiche, in dem ein solches Transportelement verwendet werden kann, typischerweise mindestens im Übergangsbereich vorhanden, nicht eingezeichnet. Die Stromversorgung kann beispielsweise über Bürstenabnehmer ober- und/oder unterhalb der Transportbahn erfolgen.

Schematisch eingezeichnet sind ebenfalls beispielhaft ein Fahrwerk 6 mit Führung 7, die aber auch anders als eingezeichnet ausgebildet sein können. Eine solche Führung kann in einer erfindungsgemäßen Weiche nur im Übergangsbereich vorhanden sein, oder nur bei der Weiche vorhanden sein, oder auch in anderen Bereichen des Transportsystems. Eingezeichnet sind ebenfalls nicht erfindungsgemäße magnetische Reaktionselemente 8, die beispielsweise als Permanentmagnete ausgebildet sein können.

Die nicht erfindungsgemäßen Elektromagnete E können auch anders geschaltet werden, beispielsweise so, dass die Normalkraft auf der rechten Seite gestärkt und auf der linken Seite geschwächt wird. In weiteren Ausführungsformen, können auch die einzeln schaltbaren Elektromagnete E statt der Permanentmagnete 8 die Aufgabe des magnetischen Reaktionselementes übernehmen. Statt der Permanentmagnete können in anderen Ausführungsformen auch nicht-schaltende Elektromagnete als magnetische Reaktionselemente 8 eingesetzt sein.

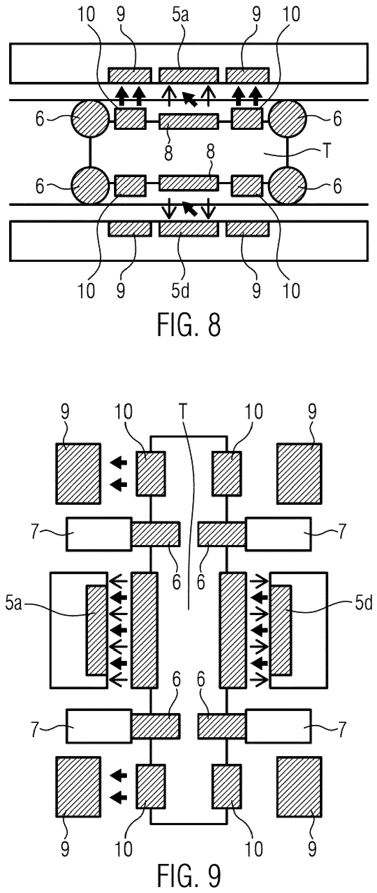

Figur 8 zeigt einen Querschnitt durch ein nicht erfindungsgemäßes Transportelement T auf einer Transportbahn. Eingezeichnet sind schematisch Fahrwerke 6 (die auch anders als eingezeichnet ausgebildet sein können), Linearmotorstränge 5a und 5d, und nicht erfindungsgemäße magnetische leitfähige Passivbauteile 10 des Transportelementes, die dazu ausgebildet sind, mit den zusätzlich zu den Spulen der Linearmotorstränge vorhandenen ansteuerbaren Spulen 9 im Übergangsbereich der Weiche zusammen zu wirken um eine entsprechende Schaltkraft hinzuzufügen und damit die Schaltkraft zu erhöhen.

In dem in Figur 8 gezeigten Beispiel sind die Spulen 9 beispielhaft so geschaltet, dass die zusätzliche Schaltkraft nach oben wirkt. Andere Schaltungen sind möglich, z.B. können die Spulen so geschaltet sein, dass die zusätzliche Schaltkraft in der Figur nach unten wirkt (nicht gezeigt). Bei Betrachtung einer ersten Ebene durch (Transportbahn und) die (Mitte oder Symmetrieebene der) Linearmotorstränge und einer zweiten und dritten Ebene senkrecht dazu und parallel zur Richtung der Transportbahn (bzw. der Bewegungsrichtung eines beweglichen Transportelementes auf der Transportbahn) jeweils durch die der Transportbahn zugewandten Seite eines Linearmotors (oder dem Punkt des Linearmotors, der am nächsten an der Transportbahn liegt), sind in dem gezeigten Beispiel die zusätzlichen Spulen 9 beispielhaft jeweils (mindestens mit der der Transportbahn zugewandten Seite oder dem Punkt, der am nächsten an der Transportbahn liegt) in der gleichen Ebene angeordnet wie ein Linearmotorstrang, d.h. in der zweiten und dritten Ebene.

In Figur 9 findet sich eine ähnliche Anordnung wie in Figur 8, nur dass in dem gezeigten Beispiel zusätzlichen Spulen 9 nicht in der gleichen Ebene liegen wie die Linearmotorstränge, also nicht in der zweiten und dritten mit Bezug auf Figur 8 diskutierten Ebene, sondern in Bezug auf die zweite bzw. dritte Ebene auf einer Ebene, die parallel dazu verläuft, aber von der Transportbahn weiter entfernt ist als die zweite bzw. dritte Ebene.

In der Figur 9 ist eine Schaltung schematisch gezeigt, wo die Spulen 9 zusammen mit den nicht erfindungsgemäßen Bauteilen 10 eine Schaltkraft nach links ausüben und gleichzeitig durch Schaltung von den Linearmotorsträngen 5a und 5d ebenfalls eine Schaltkraft nach links erzeugt wird, da Linearmotorstrang 5a so geschaltet ist, dass die Normalkraft verstärkt wird, und Linearmotorstrang 5d so geschaltet ist, dass die Normalkraft reduziert wird. Andere Schaltungen (hier nicht gezeigt), sind natürlich möglich, z. B. um eine Schaltkraft in Richtung der Figur nach rechts zu erzeugen.

## Patentansprüche

1. Weiche (1) eines Transportsystems für ein bewegliches Transportelement (T), wobei die Weiche (1) eine Hauptbahn (3) sowie eine abzweigende Nebenbahn (4) umfasst, wobei das bewegliche Transportelement (T) aus einem Übergangsbereich (2), in dem die Nebenbahn (4) von der Hauptbahn (3) abzweigt, wahlweise entlang der Hauptbahn (3) geführt oder in die Nebenbahn (4) überführt werden kann, wobei an der Hauptbahn (3) sowie an der Nebenbahn (4) jeweils ein Linearmotorstrang (5a, 5b, 5c, 5d) zur Bewegung des beweglichen Transportelements (T) vorgesehen ist, wobei mittels des einen Linearmotorstrangs (5a, 5d) eine Schaltkraft erzeugbar ist, mit der das bewegliche Transportelement (T) entlang der Hauptbahn (3) geführt oder in die Nebenbahn (4) überführt werden kann, und der Übergangsbereich den Bereich umfasst, der zwischen einem Punkt einer Transportbahn, an dem ein zweiter Linearmotorstrang (5d) neben dem Transportelement dazukommt, wenn das Transportelement (T) in anderen Bereichen nur durch einen Linearmotorstrang (5a, 5d) angetrieben wird, und einem Punkt der Transportbahn, an dem das Transportelement (T) nur vom Linearmotorstrang (5a) der Hauptbahn oder dem Linearmotorstrang (5d) der Nebenbahn beeinflusst wird, liegt,
**dadurch gekennzeichnet, dass**
im Übergangsbereich (2) Mittel zur Erhöhung der Schaltkraft vorgesehen sind, wobei eine Erhöhung der Schaltkraft im Vergleich zu der Schaltkraft steht, die erzeugbar wäre, wenn mittels des Linearmotorstrangs in anderen Bereichen des Transportsystems eine Schaltkraft erzeugt würde, wobei im Übergangsbereich die Linearmotorstränge (5a, 5d) so ausgebildet sind, dass die magnetische Feldstärke der Linearmotorstränge (5a, 5d) höher geschaltet werden kann im Vergleich zu den Linearmotorsträngen stromabwärts und/oder stromaufwärts,
im Übergangsbereich die Windungszahl der Linearmotorstränge (5a, 5d) erhöht ist im Vergleich zu den Linearmotorsträngen (5a, 5d) stromabwärts und/oder stromaufwärts und im Übergangsbereich die zulässige Stromstärke der Linearmotorstränge (5a, 5d) erhöht ist im Vergleich zu den Linearmotorsträngen (5a, 5d) stromabwärts und/oder stromaufwärts.

2. Weiche (1) nach Anspruch 1, wobei im Übergangsbereich die Wärmeabfuhr verbessert ist.

3. Weiche (1) nach einem der Ansprüche 1 bis 2, wobei die Weiche (1) im Übergangsbereich ansteuerbare Spulen (9) umfasst, die zusätzlich zu den Spulen der Linearmotorsträngen (5a, 5d) vorhanden sind, und dazu geeignet sind, die Schaltkraft im Zusammenspiel mit ein oder mehreren magnetisch leitfähigen passiven Bauteilen (10) auf einem beweglichen Transportelement (T) zu erhöhen.

4. Weiche (1) nach Anspruch 3, wobei die ansteuerbaren Spulen (9) im Übergangsbereich auf gleicher Ebene mit den Linearmotorsträngen (5a, 5d) angeordnet sind.

5. Weiche (1) nach Anspruch 3 wobei die ansteuerbaren Spulen (9) in einer anderen Ebene als die Linearmotorstränge (5a, 5d) angeordnet sind.

6. Transportsystem für ein bewegliches Transportelement, umfassend eine Transportbahn mit mindestens einer Weiche (1) nach einem der Ansprüche 1 bis 5.

7. Transportsystem nach Anspruch 6, wobei das Transportsystem mindestens eine Weiche (1) nach mindestens Anspruch 3 umfasst, und
wobei das Transportsystem eines oder mehrere Transportelemente (T) umfasst, wobei das bewegliche Transportelement ein oder mehrere magnetisch leitfähige passive Bauteile (10) umfasst, die so angeordnet sind, dass sie mit den ansteuerbaren Spulen (9), die zusätzlich zu den Spulen der Linearmotorstränge im Übergangsbereich vorhanden sind, zusammenwirken können, um die Schaltkraft zu erhöhen.

## Claims

1. Switch (1) of a transport system for a movable transport element (T), wherein the switch (1) comprises a main track (3) and a secondary track (4) branching off, wherein the movable transport element (T) can be guided from a transition region (2), in which the secondary track (4) branches off from the main track (3), optionally along the main track (3) or transferred into the secondary track (4), wherein one linear motor section (5a, 5b, 5c, 5d) is respectively provided at the main track (3) and at the secondary track (4) for moving the movable transport element (T), wherein a switching force can be generated by the one linear motor section (5a, 5b, 5c, 5d) with which the movable transport element (T) can be guided along the main track (3) or transferred into the secondary track (4), and the transition region comprises the region between a point of a transport track at which a second linear motor section (5d) is added adjacent to the transport element, if the transport element (T) in other regions is only driven by one linear motor section (5a, 5d), and a point of the transport track at which the transport element (T) is effected only by the linear motor section (5a) of the main track or the linear motor section (5d) of the secondary track,
**characterised in that**
devices for increasing the switching force are provided in the transition region (2), wherein an increase of the switching force is in comparison to the switching force, that would be generated if a switching force was generated by the linear motor section in other regions of the transport system, wherein the linear motor sections (5a, 5d) in the transition region are formed such that the magnetic field strength of the linear motor sections (5a, 5d) can be switched higher than in comparison to the linear motor sections downstream and/or upstream,
the number of turns of the linear motor sections (5a, 5d) in the transition region is increased in comparison to the linear motor sections (5a, 5d) downstream and/or upstream and
the admissible current of the linear motor sections (5a, 5d) in the transition region is increased in comparison to linear motor sections (5a, 5d) downstream and/or upstream.

2. Switch (1) according to claim 1, wherein the heat dissipation in the transition region is improved.

3. Switch (1) according to one of the claims 1 to 2, wherein the switch (1) comprises actuatable coils (9) in the transition region which are present in addition to the coils of the linear motor sections (5a, 5d) and are suitable for increasing the switching force in combination with one or more magnetically conductive passive components (10) on a movable transport element (T).

4. Switch (1) according to claim 3, wherein the actuatable coils (9) are arranged in the transition region on the same plane with the linear motor sections (5a, 5d)..

5. Switch (1) according to claim 3, wherein the actuatable coils (9) are arranged in a different plane than the linear motor sections (5a, 5d).

6. Transport system for a movable transport element, comprising a transport track with at least one switch (1) according to one of the claims 1 to 5.

7. Transport system according to claim 6, wherein the transport system comprises at least one switch (1) according at least to claim 3 and wherein the transport system comprises one or more transport elements (T), wherein the movable transport element comprises one or more magnetically conductive passive components (10) that are arranged such that they act together with the actuatable coils (9) that are present in the transition region in addition to the coils of the linear motor sections in order to increase the switching force.

## Revendications

1. Aiguillage (1) d'un système de transport pour un élément de transport mobile (T), dans lequel l'aiguillage (1) comprend une voie principale (3) ainsi qu'une voie secondaire (4) ramifiée, dans lequel l'élément de transport mobile (T) peut être guidé au choix le long de la voie principale (3) à partir d'une zone de transition (2) dans laquelle la voie secondaire (4) se ramifie à partir de la voie principale (3) ou transféré dans la voie secondaire (4), dans lequel sur la voie principale (3) ainsi que sur la voie secondaire (4), respectivement, un brin de moteur linéaire (5a, 5b, 5c, 5d) est prévu pour le déplacement de l'élément de transport mobile (T), dans lequel une force de commutation peut être générée au moyen du premier train de moteur linéaire (5a, 5d), avec laquelle l'élément de transport mobile (T) peut être guidé le long de la voie principale (3) ou transféré dans la voie secondaire (4), et la zone de transition comprend la zone qui est située entre un point d'une voie de transport où un second brin de moteur linéaire (5d) vient s'ajouter à côté de l'élément de transport, lorsque l'élément de transport (T) est entraîné dans d'autres zones uniquement par un brin de moteur linéaire (5a, 5d), et un point de la voie de transport où l'élément de transport (T) n'est influencé que par le brin de moteur linéaire (5a) de la voie principale ou le brin de moteur linéaire (5d) de la voie secondaire,
**caractérisé en ce que**
des moyens pour augmenter la force de commutation sont prévus dans la zone de transition (2), dans lequel une augmentation de la force de commutation est par rapport à la force de commutation qui pourrait être générée si une force de commutation était générée dans d'autres zones du système de transport au moyen du brin de moteur linéaire, dans lequel dans la zone de transition, les brins de moteur linéaire (5a, 5d) sont conçus de telle sorte que l'intensité de champ magnétique des brins de moteur linéaire (5a, 5d) peut être commutée plus haut que les brins de moteur linéaire en aval et/ou en amont,
dans la zone de transition, le nombre de spires des brins de moteur linéaire (5a, 5d) est augmenté par rapport aux brins de moteur linéaire (5a, 5d) en aval et/ou en amont ; et
dans la zone de transition, l'intensité de courant admissible des brins de moteur linéaire (5a, 5d) est augmentée par rapport aux brins de moteur linéaire (5a, 5d) en aval et/ou en amont.

2. Aiguillage (1) selon la revendication 1, dans lequel la dissipation de chaleur est améliorée dans la zone de transition.

3. Aiguillage (1) selon l'une quelconque des revendications 1 à 2, dans lequel l'aiguillage (1) comprend des bobines (9) pouvant être commandées dans la zone de transition, qui sont présentes en plus des bobines des brins de moteur linéaire (5a, 5d) et sont adaptées pour augmenter la force de commutation en combinaison avec un ou plusieurs composants passifs magnétiquement conducteurs (10) sur un élément de transport mobile (T).

4. Aiguillage (1) selon la revendication 3, dans lequel les bobines pouvant être commandées (9) sont agencées dans la zone de transition sur le même plan que les brins de moteur linéaire (5a, 5d).

5. Aiguillage (1) selon la revendication 3, dans lequel les bobines pouvant être commandées (9) sont agencées dans un plan différent des brins de moteur linéaire (5a, 5d).

6. Système de transport pour un élément de transport mobile comprenant une voie de transport avec au moins un aiguillage (1) selon l'une quelconque des revendications 1 à 5.

7. Système de transport selon la revendication 6, dans lequel le système de transport comprend au moins un aiguillage (1) selon au moins la revendication 3, et
dans lequel le système de transport comprend un ou plusieurs éléments de transport (T), dans lequel l'élément de transport mobile comprend un ou plusieurs composants passifs magnétiquement conducteurs (10) qui sont agencés de manière à pouvoir coopérer avec les bobines pouvant être commandées (9) qui sont présentes dans la zone de transition en plus des bobines des brins de moteur linéaire pour augmenter la force de commutation.
